# EUROPEAN PATENT APPLICATION

(11) **EP 2 842 871 A1**
(43) Date of publication of application: **04.03.2015**
(21) Application number: 13182094.6
(22) Date of filing: 28.08.2013
(51) Int. Cl.: B64D 11/06

(54) **Aircraft seat and method for monitoring usage of a power outlet at an aircraft seat**

(71) Applicant: Airbus Operations GmbH, 21129 Hamburg (DE)
(72) Inventor: Düser, Gerd, 21635 Jork (DE); Karsten, Sebastian, 24558 Henstedt-Ulzburg (DE); Link, Thorsten, 25336 Klein Nordende (DE); Masloboy, Frank, 21075 Hamburg (DE)
(74) Representative: Isarpatent

(57) **Abstract**

The present invention pertains to an aircraft seat, comprising a power outlet, a power monitoring unit coupled to the power outlet and configured to monitor whether the power outlet is in use and to emit an outlet usage signal based on the monitoring result, and a wireless communication device coupled to the power monitoring unit and configured to receive the outlet usage signal and to wirelessly send the outlet usage signal to an aircraft cabin management device.

## Description

### Field of the invention

The present invention pertains to an aircraft seat with power outlet usage monitoring, an aircraft seat management system for monitoring usage of power outlets at aircraft seats, and a method for monitoring usage of a power outlet at an aircraft seat.

### Background of the invention

On board of aircraft, an indication of passengers using power outlets installed at their aircraft seats to the cabin crew is required. Usually, certain security regulations require such an indication to be readily available to the aircraft staff.

The document EP 0 881 145 B1 discloses a power supply device for providing a supply voltage for electric devices in an airplane cabin with an outlet plug having a detector that detects the presence of a plug inserted in the socket. Via a signal line and a supply line for supplying a voltage supply unit is connected to the power outlet, which is located away from the wall outlet. The supply unit switches the supply voltage on the power cord when the connector detector indicates the presence of a connector on the signal cable to the power supply unit.

However, there is a need for improved relay of the indication whether a power outlet at an aircraft seat is in use or not.

### Summary of the invention

It is therefore one object of the present invention to provide for an improved solution to indicate to the cabin crew of an aircraft whether a power outlet at an aircraft seat is in use or not, and to enable the cabin crew to receive condensed information on the outlet usage of aircraft seats of an aircraft.

This problem is solved by an aircraft seat having the technical features of claim 1, an aircraft seat management system having the technical features of claim 3, and a method for monitoring power usage at a power outlet of an aircraft seat, the method having the features of claim 7.

According to a first aspect of the present invention, an aircraft seat comprises a power outlet, a power monitoring unit coupled to the power outlet and configured to monitor whether the power outlet is in use and to emit an outlet usage signal based on the monitoring result, and a wireless communication device coupled to the power monitoring unit and configured to receive the outlet usage signal and to wirelessly send the outlet usage signal to an aircraft cabin management device.

According to a second aspect of the present invention, an aircraft seat management system comprises a plurality of aircraft seats according to the first aspect, a wireless radio receiver configured to receive the wirelessly sent outlet usage signals from the plurality of aircraft seats, and an aircraft cabin management device coupled to the wireless radio receiver and configured to receive the outlet usage signals from the plurality of aircraft seats. According to a third aspect of the present invention, a method for monitoring power usage at a power outlet of an aircraft seat comprises detecting, at a power outlet of an aircraft seat, whether the power outlet is in use, generating an outlet usage signal on the basis of the detection result, and sending, via a wireless communication signal, the outlet usage signal from the aircraft seat to an aircraft cabin management device.

### Embodiments of the invention

One main idea of the present invention is to locally collect power outlet usage information once or periodically at an aircraft seat and to relay the collected information wirelessly to a central management device of the aircraft.

An advantage of such power outlet monitoring is the avoidance of local indicators at the aircraft seats, such as LEDs. By centrally collecting all power outlet usage information from the individual aircraft seats it will be easier for the cabin crew to access the information without having to actually pass by all the aircraft seats in order to check the indicators.

Furthermore, an advantage is that the wireless data link from the aircraft seats to the central aircraft cabin management device allows direct transport of the information signals to the cabin management system without blocking other wired data channels from the aircraft seats to aircraft systems.

The dependent claims provide additional technical features of advantageous embodiments and further improvements of the invention.

According to an embodiment of the aircraft seat, the power monitoring unit may comprise a current sensor configured to detect a current flowing through the power outlet.

According to an embodiment of the aircraft seat management system, the aircraft seat management device may comprise a graphical display configured to display a graphical representation of the plurality of outlet usage signals. This enables a condensation of the received outlet usage signals on an overall cabin level, for example in regular and periodic updates.

According to a further embodiment of the aircraft seat management system, the graphical representation may include a graphical illustration of the plurality of aircraft seats. That way, the cabin crew may easily gather very quickly which of the power outlets at which aircraft seat are still in use.

According to a further embodiment, an aircraft may comprise an aircraft cabin management system according to the second aspect.

According to an embodiment of the method, the method may further comprise displaying, by the aircraft cabin management device, a graphical representation of the outlet usage signal at a graphical display.

According to a further embodiment of the method, the method may further comprise displaying, by the aircraft cabin management device, a graphical illustration of the aircraft seat along with the graphical representation of the outlet usage signal at the graphical display.

The invention will be explained in greater detail with reference to exemplary embodiments depicted in the drawings as appended.

### Brief description of the drawings

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
- Fig. 1: shows a schematic illustration of a passenger cabin having aircraft seats according to an embodiment of the invention.
- Fig. 2: shows a schematic illustration of an aircraft seat management system according to another embodiment of the invention.
- Fig. 3: shows a schematic illustration of a method for monitoring power usage at a power outlet of an aircraft seat according to yet another embodiment of the invention.

### Detailed description of the embodiments

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Aircraft seat within the meaning of the invention may comprise any facility for temporary sojourn by a passenger of an aircraft. For example, aircraft seats within the meaning of the invention may comprise settees, chairs, armchairs, first class lounges or similar seating devices.

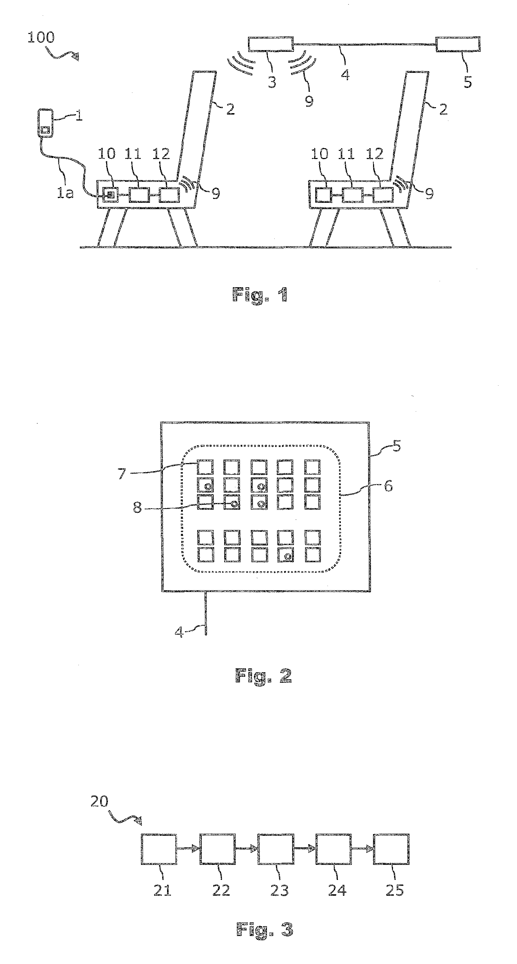

Fig. 1 shows a schematic illustration of a passenger cabin 100 within an aircraft. The passenger cabin 100 may comprise a plurality of aircraft seats 2, of which two are shown exemplarily in Fig. 1. However, as may be apparent to the skilled person, any other number of aircraft seats 2 may be provided in the passenger cabin 100 as well.

The aircraft seat 2 comprises a power outlet 10 which may be coupled with a power supply (not shown) supplying electrical power to an electric device plugged in the power outlet 10. The power supply may for example comprise an AC/AC converter. It may be possible to connect the power supplies of neighbouring seats via a seat-to-seat power supply line. A first one of the aircraft seats 2 may then be coupled to an on-board power supply unit (not shown) of the passenger cabin 100 or the aircraft. The power outlet 10 may be used for a passenger to supply an electric device with electric power, for example a personal electronic device 1 such as a smartphone, a mobile phone, a laptop or any similar device. To that end, the passenger may plug a power cord 1a of the personal electronic device 1 into the power outlet 10, thereby causing electric current to flow from the power supply through the power outlet 10 to the personal electronic device 1.

In order to detect whether the power outlet 10 is in use, a power monitoring unit 11 is coupled to the power outlet 10. The power monitoring unit 11 may for example comprise a current sensor which may be configured to detect a current flowing through the power outlet 10. Alternatively or additionally, the power monitoring unit 11 may include a mechanical plug detection sensor which is configured to detect whether a plug is inserted into the power outlet 10 or not. The power monitoring unit 11 is configured to emit an outlet usage signal based on the monitoring result, i.e. the outlet usage signal indicates whether the power outlet 10 is in use or not. For example, if a current is detected flowing through the power outlet 10 or if a plug is detected to be inserted into the power outlet 10, it can be assumed that the power outlet 10 is in use.

The power monitoring unit 11 is coupled to a wireless communication device 12 which is configured to receive the outlet usage signal and to wirelessly send the outlet usage signal to an aircraft cabin management device 5. The aircraft seat management device 5 may be coupled to a wireless radio receiver 3 via a network line 4 or similar communication line and may be configured to receive the outlet usage signals sent via radio communication signals 9 from the plurality of aircraft seats 2. The wireless radio receiver 3 and the aircraft cabin management device 5 may both be part of an aircraft seat management system, which also includes a plurality of aircraft seats 2.

The wireless communication device 12 may be configured for an easy adaption of existing outlet usage indication systems, for example outlet usage indication light module installed at the aircraft seat 2. The wireless communication device 12 may then be exchanged with such an outlet usage indication system without any modification of the mechanical seat interface and the electrical/data interface. The wireless communication device 12 may fit to the mechanical provision originally made for the outlet usage indication light module. This enables the wireless communication device 12 to be installed in an exposed position of the aircraft 2 in order to improve the quality of wireless outlet usage signal transmission to the wireless radio receiver 3. Alternatively, a hidden installation within the interior of the aircraft seat 2, for example due to aesthetic reasons, may also be possible.

As shown in Fig. 2 in greater detail, the aircraft cabin management device 5 may comprise a graphical display 6 configured to display a graphical representation 8 of the plurality of outlet usage signals. The graphical representation 8 may for example comprise coloured or highlighted dots or symbols indicating different states of usage of the power outlets 10. In order to clarify the representation, it may also include a graphical illustration 7 of the plurality of aircraft seats 2 which may be spatially aligned with the graphical representation 8 of the plurality of outlet usage signals. That way, cabin crew members may easily check the status of the power outlets 10 of the aircraft seats 2.

The aircraft seat management system as explained in conjunction with Figs. 1 and 2 may be used in an aircraft, for example in an aircraft with a passenger cabin 100.

Fig. 3 schematically illustrates a method 20 for monitoring power usage at a power outlet of an aircraft seat, for example at a power outlet 10 as shown for an aircraft seat 2 in Fig. 1. The method may comprise as a first step 21 detecting, at a power outlet 10 of an aircraft seat 2, whether the power outlet 10 is in use. In a second step 22, an outlet usage signal may be generated on the basis of the detection result. Finally, in a third step 23, the outlet usage signal may be wirelessly sent via a wireless communication signal 9, from the aircraft seat 2 to an aircraft cabin management device 5. The wireless communication signal 9 may for example comprise a WLAN signal, a Bluetooth(R) signal, a radio signal, an infrared communication signal, or any other suitable means of wireless communication.

Optionally, in a fourth step 24 the aircraft seat management device 5 may display a graphical representation 8 of the outlet usage signal at a graphical display 6, along with a graphical illustration 7 of the aircraft seat 2 in an optional fifth step 25.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively.

### List of Reference Signs

- 1: Personal electronic device
- 1a: Power cord
- 2: Aircraft seat
- 3: Wireless radio receiver
- 4: Network line
- 5: Aircraft cabin management device
- 6: Graphical display
- 7: Graphical illustration
- 8: Graphical representation
- 9: Wireless communication signal
- 10: Power outlet
- 11: Power outlet monitoring unit
- 12: Wireless communication device
- 20: Method
- 21: Method step
- 22: Method step
- 23: Method step
- 24: Method step
- 25: Method step
- 100: Passenger cabin

## Claims

1. An aircraft seat (2), comprising:
a power outlet (10);
a power monitoring unit (11) coupled to the power outlet (10) and configured to monitor whether the power outlet (10) is in use and to emit an outlet usage signal based on the monitoring result; and
a wireless communication device (12) coupled to the power monitoring unit (11) and configured to receive the outlet usage signal and to wirelessly send the outlet usage signal to an aircraft cabin management device (5).

2. The aircraft seat (2) of claim 1, wherein the power monitoring unit (11) comprises a current sensor configured to detect a current flowing through the power outlet (10).

3. An aircraft seat management system, comprising:
a plurality of aircraft seats (2) according to one of the claims 1 and 2;
a wireless radio receiver (3) configured to receive the wirelessly sent outlet usage signals from the plurality of aircraft seats (2); and
an aircraft cabin management device (5) coupled to the wireless radio receiver (3) and configured to receive the outlet usage signals from the plurality of aircraft seats (2).

4. The aircraft seat management system of claim 3, the aircraft cabin management device (5) comprising a graphical display (6) configured to display a graphical representation (8) of the plurality of outlet usage signals.

5. The aircraft seat management system of claim 4, wherein the graphical representation (8) includes a graphical illustration (7) of the plurality of aircraft seats (2).

6. An aircraft, comprising an aircraft cabin management system according to one of the claims 3 to 5.

7. A method (20) for monitoring power usage at a power outlet (10) of an aircraft seat (2), the method (20) comprising:
detecting (21), at a power outlet (10) of an aircraft seat (2), whether the power outlet (10) is in use;
generating (22) an outlet usage signal on the basis of the detection result; and
sending (23), via a wireless communication signal (9),
the outlet usage signal from the aircraft seat (2) to an aircraft seat management device (5).

8. The method (20) of claim 7, further comprising:
displaying (24), by the aircraft cabin management device (5), a graphical representation (8) of the outlet usage signal at a graphical display (6).

9. The method (20) of claim 8, further comprising:
displaying (25), by the aircraft cabin management device (5), a graphical illustration (7) of the aircraft seat (2) along with the graphical representation (8) of the outlet usage signal at the graphical display (6).
